Europäisches Patentamt

European Patent Office

Office européen des brevets

(11) Publication number: 0 352 475 A2

# (12) EUROPEAN PATENT APPLICATION

(21) Application number: 89111322.7

(22) Date of filing: 21.06.89

(51) Int. Cl.⁴: F25D 17/06 , F25D 29/00 , G05D 23/12

(30) Priority: 27.07.88 IT 4575288

(43) Date of publication of application:
31.01.90 Bulletin 90/05

(84) Designated Contracting States:
DE ES FR GB IT SE

(71) Applicant: INDUSTRIE ZANUSSI S.p.A.
Via Giardini Cattaneo 3
I-33170 Pordenone(IT)

(72) Inventor: Patron, Oscar
Via Pastrengo 33
I-33074 Fontanafredda (Pordenone)(IT)
Inventor: Marega, Paolo
Via Monte Pelmo 6
I-33170 Pordenone(IT)

(74) Representative: Grosse, Wolfgang et al
Patentanwälte Herrmann-Trentepohl,
Kirschner Grosse, Bockhorni & Partner
Forstenrieder Allee 59
D-8000 München 71(DE)

(54) A means for regulating the cooling temperature of a cooling apparatus.

(57) A means for regulating the cooling temperature of a compartment (5) of a cooling apparatus, said compartment accommodating a drawer (10) for containing food, and communicating via conduits (15, 16) with a compartment (6) therebelow for freezing food, that is equipped with a ventilated evaporator (13).

The means comprises a regulator (21) and a thermostat (22), both accommodated in a box-shaped housing (23) to be applied against the back wall (19) of the compartment (5) in correspondence with the outlet orifice (25) of the conduit (15), in order to vary the flow rate of the cold air circulating from the compartment (6) to the compartment (5) in accordance with the temperature existing in the compartment (5) and controlled by the thermostat (22).

Fig.1

## A means for regulating the cooling temperature of a cooling apparatus

The present invention relates to a means for regulating the cooling temperature of a cooled compartment of a cooling apparatus, such as a refrigerator having a plurality of separate superimposed compartments, said compartment being adapted in particular to keep the temperature of the food virtually constant, within values preferably in the range of between about 0 °C and ± 1 °C.

Cooling apparatus of the described species are known (U.S. patent no. 4,241,589) comprising substantially one cooling compartment communicating via an air circulating conduit with a freezing compartment thereabove provided with an evaporator connected in the cooling circuit of the apparatus, and with a motor fan adapted to produce a flow of cooled air through the two compartments to keep them at the regulating temperatures respectively provided.

Each cooling apparatus is furthermore provided with a drawer for containing food disposed in the lower part of the cooling compartment and communicating with a further air circulating conduit applied vertically along the back wall of the compartment and connected with the aforesaid air conduit.

This drawer is in particular closed at the top by a removable cover and delimited by a peripheral space communicating with the outlet orifice of the further conduit, so that the food contained in the drawer can be cooled by the circulation of cold air around the outer walls of the drawer.

The drawer in question is furthermore provided with a mechanism for regulating the flow of cold air consisting of a slider to be moved by a knob and sliding in the longitudinal direction across the drawer, said slider being provided with a gate adapted to vary the cross-section of the outlet orifice of the conduit, and thus the rate of flow of the cold air circulating towards the drawer, in accordance with the regulating position of the knob.

However, this regulating mechanism is of complicated construction and also fails to allow for automatic regulation of the cooling temperature of the food inside the drawer, so as to keep this temperature within narrow limits to make it possible to keep variable amounts of food for long periods of time.

The object of the present invention is therefore to overcome the above-described disadvantages and limits by a simple type of means adapted to regulate automatically the cooling temperature of the food disposed in the cubicle of a cooling apparatus, for any amount of food to be cooled.

This and other objects are achieved according to the invention by a means for regulating the cooling temperature of a cooling apparatus, comprising a first cooling compartment provided with at least one drawer to contain food, and a second, separate, freezing compartment disposed preferably therebelow and communicating therewith, said second compartment being provided with at least one ventilated evaporator for producing a flow of cold air through both compartments.

The means in question is characterized in that it comprises at least one regulator for the flow of cold air and one temperature regulating thermostat which interact and are disposed within the first compartment, the regulator being adapted to vary the flow rate of the cold air circulating from the second compartment toward the first compartment, in accordance with the cooling temperature within the first compartment controlled by the thermostat.

The features of the invention will become more apparent from the following description, intended only as a nonrestrictive example, with reference to the adjoined drawings in which

Fig. 1 shows schematically a lateral cross-sectional view of a cooling apparatus provided with the inventive regulating means;

Fig. 2 shows an exploded perspective view of the present regulating means.

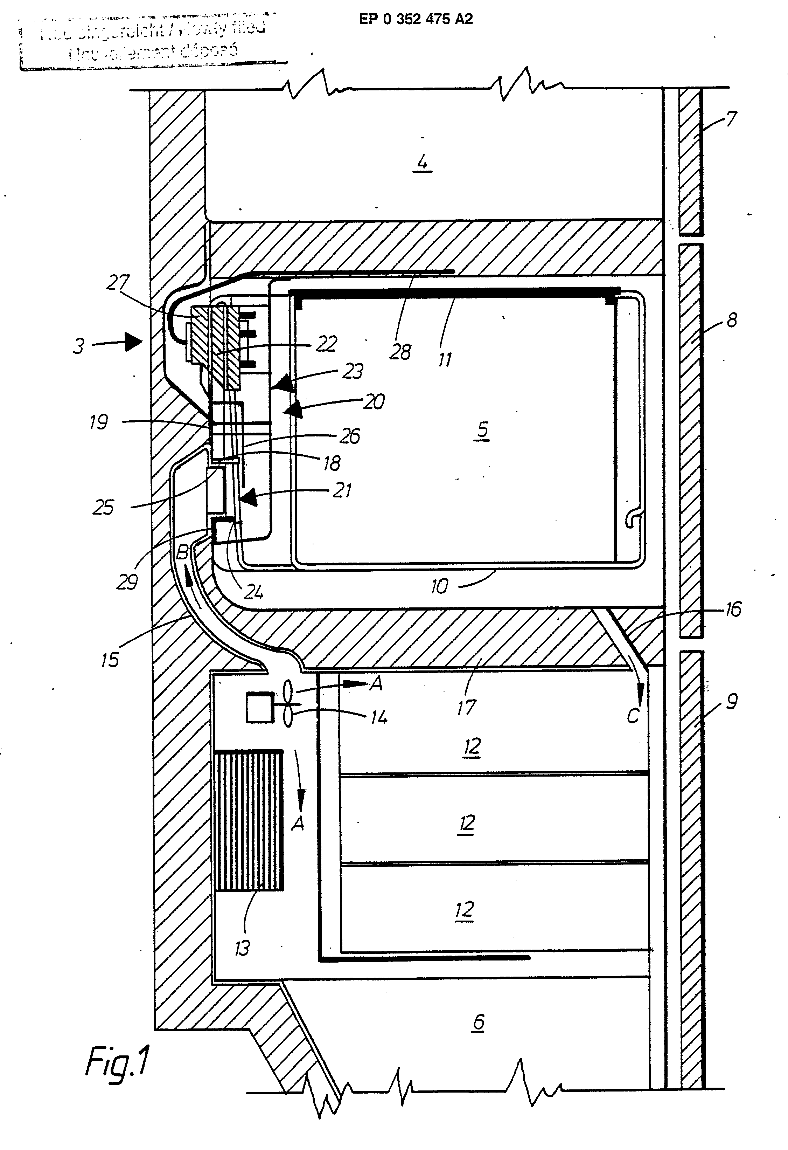

Referring to Fig. 1, one can see part of a cooling apparatus comprising a thermally insulated cabinet 3 extending vertically and subdivided into three separate, independent compartments 4, 5, 6 disposed one above the other and adapted to be closed at the front by corresponding thermally insulated doors 7, 8, 9, compartments 4 and 5 being provided for cooling food at average temperatures of about +6 °C and 0 °C, respectively, while compartment 6 is provided for freezing food at the usual freezing temperatures in the range between about -18 °C and -24 °C. For the effects of the invention, only compartments 5 and 6 will be taken into consideration since their functioning is dependent on the presence of the regulating means described below, while a description of compartment 4 is omitted since it is irrelevant to the invention.

One can see that compartment 5 is realized with a reduced volume compared to compartment 6 therebelow, and can also accommodate at least one drawer 10 made of plastic material to be hermetically closed by an upper cover 11 and adequately dimensioned to be able to contain meat, fish, vegetables and similar food to be conserved for long periods of time at constant temperatures of about 0 °C.

Compartment 6 is, in turn, provided with a series of drawers 12 disposed one above the other, open at the top and intended to contain the food to be frozen, and with at least one evaporator 13 connected in the cooling circuit of the apparatus, and with at least one fan 14 disposed in the vicinity of evaporator 13 and adapted to produce a flow of cold air circulating through compartment 6 to freeze the food (arrows A).

Compartments 5 and 6 furthermore communicate with each other via at least two conduits 15 and 16 passing through dividing wall 17 located between the compartments and provided in correspondence with the rear zone and the front zone, respectively, of cabinet 3 of the apparatus. Conduit 15 is linked at one end to the ceiling of compartment 6 in the vicinity of the turn of fan 14, and penetrates with its other end partially into compartment 5, passing through a corresponding orifice 18 formed in back wall 19 of the compartment in question. In turn, conduit 16 is linked with its ends to the ceiling of compartment 6 and to the bottom of compartment 5.

The purpose of conduits 15 and 16 is thus to allow for a flow of cold air circulating between compartments 5 and 6 in the directions indicated by arrows B and C, the flow being produced by fan 14 and evaporator 13 and adapted to effect the cooling of the outer walls of drawer 10, and thus of the food contained in this drawer.

To allow for automatic regulation of the flow rate of the cold air penetrating compartment 5, and thus of the cooling temperature of the food in drawer 10, the invention provides a regulating means 20 comprising substantially at least one regulator 21 for the flow of cold air and a temperature regulating thermostat 22, both supported and accommodated in a plastic housing 23 formed as described below and applied by means of screws or similar means (not shown) against back wall 19 and inside compartment 5.

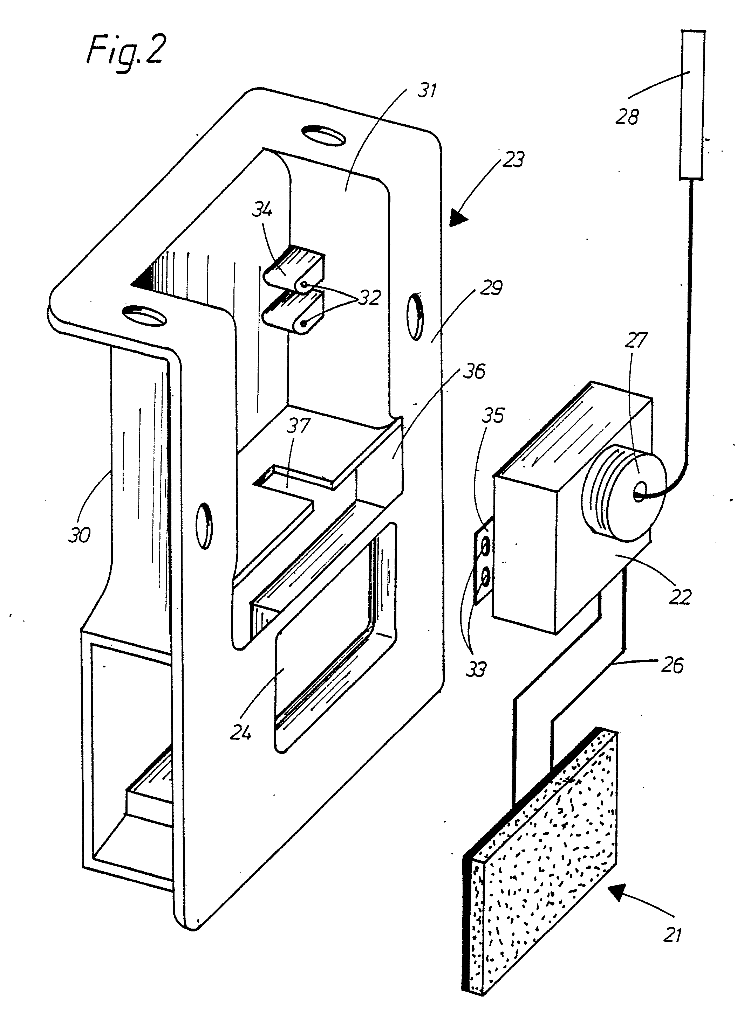

In particular, regulator 21 is preferably in the form of a parallelepi ded gate and adapted to vary the inflow port of rectangular orifice 24 provided in housing 23 in a position coincident with and close to outlet orifice 25 of conduit 15, in order to be able to regulate the flow rate of cold air circulating from compartment 6 toward compartment 5 in the cooling apparatus in question. This regulator, which may also be realized in ways other than that described, is furthermore interconnected with thermostat 22 via an expediently bent metal rod 26, said rod being adapted to be moved by bellows 27 of thermostat 22 into various positions, thereby moving the regulator, in accordance with the cooling temperatures present inside compartment 5 and detected by sensitive bulb 28 connected to the thermostat. As can be seen from Fig. 2, housing 23 is box-shaped and provided with two mutually spaced, parallel, flat walls 29, 30, wall 29 being provided at the bottom with orifice 24 and at the top with a cavity 31 intended to accommodate the body of thermostat 22 which may be fixed in position by means of screws or the like to be engaged through corresponding holes 32, 33 provided in widened portions 24 formed integrally with housing 23, and in flat tabs 35 connected externally to thermostat 22, respectively. In turn, regulator 21 is previously inserted through a rectangular orifice 36 formed in wall 29 of housing 23 above orifice 24, the regulator then being positioned so as to fit against the back surface of orifice 24, in a state in which metal rod 26 of thermostat 22 is inserted and slides through a corresponding groove 37 linked orthogonally with former orifice 36. Housing 23 accommodating the thermostat 22 and regulator 21 unit in the above-described way is then disposed with its wall 29 against back wall 19 of compartment 5 of the cooling apparatus, the wall being expediently shaped to accommodate thermostat 22, and finally the housing is fixed removably in position. The regulating means designed in this way thus allows for automatic regulation of the flow rate of cold air circulating in compartment 5, the air being directed advantageously along the bottom surface of food drawer 10, providing orifice 24 of housing 23 at a corresponding level, the regulation being dependent on the cooling temperature present inside compartment 5 and allowing for this temperature to be kept constant within narrow limits, preferably in the range between $0\,^{\circ}\mathrm{C}$ and $\pm\,1\,^{\circ}\mathrm{C}$, making it possible to conserve variable amounts of food for long periods of time. This means can furthermore be mounted and dismounted quickly and easily with respect to the cooling apparatus, utilizing a thermostat-regulator unit already existing on the market.

**Claims**

1. A means for regulating the cooling temperature of a cooling apparatus, comprising a first cooling compartment provided with at least one drawer for containing food and a second, separate, freezing compartment disposed preferably therebelow and communicating therewith, said second compartment being provided with at least one ventilated evaporator for producing a flow of cold air through both compartments, **characterized** in that it comprises at least one regulator (21) for the flow of cold air and one temperature regulating thermostat (22) which interact and are disposed within the first compartment (5), the regulator (21) being adapted to vary the flow rate of the cold air circulating from the second compartment (6) toward the first compartment (5) in accordance with the cooling temperature in the first compartment (5) controlled by the thermostat (22).

2. The regulating means of claim 1, **characterized** in that the regulator (21) and the thermostat (22) are adapted to be mounted within at least one box-shaped housing (23) to be applied removably by means known per se against the back wall (19) of the first compartment (5), the housing (23) being provided with at least one orifice (24) whose port can be regulated by the regulator (21) and which is disposed in a position coincident with and close to the outlet orifice (25) of at least one conduit (15) interconnecting the first and second compartments (5, 6).

Fig.1

Fig.2